# FASCICULE DE BREVET EUROPEEN

(11) **EP 3 389 832 B1**
(45) Date de publication et mention de la délivrance du brevet: **23.02.2022**
(21) Numéro de dépôt: 16829263.9
(22) Date de dépôt: 19.12.2016
(51) Int. Cl.: B01D 61/36, B01D 53/14

(54) **SYSTÈME DE RÉGÉNÉRATION MEMBRANAIRE D'UN SOLVANT DE CAPTAGE DE GAZ ACIDE**
MEMBRANREGENERATIONSSYSTEM FÜR EIN LÖSUNGSMITTEL ZUR ERFASSUNG EINES SAUERGASES
MEMBRANE REGENERATION SYSTEM FOR AN ACID GAS CAPTURE SOLVENT

(30) Priorité: 18.12.2015 FR 1562764
(43) Date de publication de la demande: 24.10.2018
(73) Titulaire: Electricité de France, 75008 Paris (FR)
(72) Inventeur: NEVEUX, Thibaut, 78400 Chatou (FR); LE MOULLEC, Yann, 29760 Penmarch (FR); FAVRE, Eric, 54000 Nancy (FR)
(74) Mandataire: Plasseraud IP
(86) Numéro de dépôt international: PCT/FR2016/053544
(87) Numéro de publication internationale: WO 2017/103547

(56) Documents cités:
- MENGXIANG FANG ET AL: "COdesorption from rich alkanolamine solution by using membrane vacuum regeneration technology", INTERNATIONAL JOURNAL OF GREENHOUSE GAS CONTROL, ELSEVIER LTD, GB, vol. 9, 11 mai 2012 (2012-05-11), pages 507-521, XP028497675, ISSN: 1750-5836, DOI: 10.1016/J.IJGGC.2012.05.013 [extrait le 2012-05-21]
- ALEXANDER TRUSOV ET AL: "Gas/liquid membrane contactors based on disubstituted polyacetylene for COabsorption liquid regeneration at high pressure and temperature", JOURNAL OF MEMBRANE SCIENCE, ELSEVIER BV, NL, vol. 383, no. 1, 27 août 2011 (2011-08-27) , pages 241-249, XP028306481, ISSN: 0376-7388, DOI: 10.1016/J.MEMSCI.2011.08.058 [extrait le 2011-09-02]
- KOSARAJU P ET AL: "Hollow fiber membrane contactor based CO2 absorption-stripping using novel solvents and membranes", INDUSTRIAL & ENGINEERING CHEMISTRY RESEARCH, AMERICAN CHEMICAL SOCIETY, US, vol. 44, no. 5, 2 mars 2005 (2005-03-02), pages 1250-1258, XP002436869, ISSN: 0888-5885, DOI: 10.1021/IE0495630
- MASAAKI TERAMOTO ET AL: "Separation and enrichment of carbon dioxide by capillary membrane module with permeation of carrier solution", SEPARATION AND PURIFICATION TECHNOLOGY, vol. 30, no. 3, 1 mars 2003 (2003-03-01), pages 215-227, XP055288033, NL ISSN: 1383-5866, DOI: 10.1016/S1383-5866(02)00144-2

## Description

### INTRODUCTION

L'objet de la présente invention concerne un procédé de traitement d'un liquide, qui est typiquement un procédé de régénération d'un solvant de captage de gaz acide par l'utilisation d'une membrane spécifique à l'un des agents responsables du captage dans ledit solvant. Il est décrit également un dispositif permettant la mise en œuvre de ce procédé.

Le captage des gaz acides, tel que le CO₂ ou H2S, dans les usines émettant de larges quantités de ces gaz est d'importance pour limiter la pollution et limiter en particulier la hausse des émissions de gaz à effet de serre dans l'atmosphère.

Aujourd'hui, les procédés les plus matures permettant de mettre en œuvre cette technologie sont les procédés par absorption chimique.

Toutefois, les procédés de captage de ces gaz acides, tel que le CO₂, par absorption consomment beaucoup d'énergie pour la régénération du solvant par « strippage » à la vapeur. Cette consommation énergétique, excessive, limite considérablement le déploiement de la technologie du fait des coûts énergétiques supplémentaires à fournir ou de la réduction massive de rendement induite sur les centrales électriques par exemple. De ce fait, la réduction de cette consommation énergétique est un enjeu majeur dans toutes les filières concernées.

En outre, cette technologie comporte des aléas si elle n'est pas mise en œuvre en toute rigueur : si le danger représenté par l'utilisation de hautes températures (entre 100 et 150°C typiquement) peut être relativement facilement contenu, il arrive qu'il soit constaté que les vapeurs de solvants de captage des gaz acides contaminent le gaz acide produit, limitant ainsi la valorisation de ce produit recyclé.

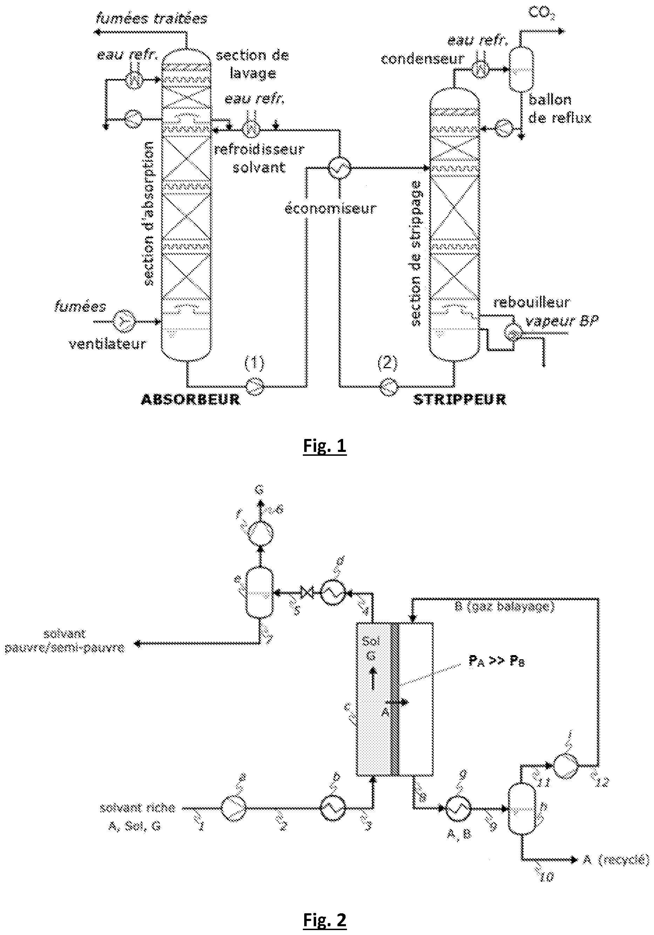

Ainsi et à titre d'illustration, la Figure 1 est un schéma du procédé typique de strippage dans sa forme la plus simple (procédé dit de référence) pour le cas particulier des centrales électriques, lequel procédé est applicable pour d'autres industries telles que les industries pétro-gazières, les raffineries, les aciéries, les cimenteries, etc.

Il est également clair que le procédé de l'art antérieur implique de disposer d'un espace volumineux pour qu'il soit mis en œuvre (i.e. colonnes de plusieurs mètres de haut). L'infrastructure qui s'impose nécessite en outre un entretien d'autant plus important que son volume est grand.

Ainsi, plusieurs techniques ont été décrites dans l'art afin de surmonter ces problèmes.

L'utilisation de solvants de captages volatiles a été mise en œuvre (R.A. Frimpong et al. ; International Journal of Greenhouse Gas Control ; 9 ; (2012) ; 124-129). Il est divulgué à cet égard une méthode de strippage de solutions contenant du CO₂ en présence de monoéthanolamine (MEA) en présence d'un hydrocarbure dans le solvant, dont la volatilisation joue le rôle de gaz de strippage. Toutefois, cette solution technique ne permet pas de résoudre tous les inconvénients cités ci-dessus, et génère d'autres problèmes liés à la nature particulière des solvants utilisés (nécessité de systèmes de condensation plus évolués, dangerosité plus grande de certains des solvants aux températures mis en œuvre, etc.).

L'utilisation de membranes a été également évoquée dans l'art comme une solution alternative à la technique de strippage classique.

Ainsi, M. Simioni et al. (Journal of Membrane Science; 378; (2011); 18-27) divulgue le strippage de CO₂ de solutions aqueuses de carbonate de potassium par l'utilisation de membranes. Les membranes utilisées sont des membranes polymères plates microporeuses et la température du procédé est comprise entre 60°C et 110°C. Il est divulgué que l'efficacité de l'extraction du CO₂ est dépendante de la température : aux températures plus élevées, une fraction non négligeable d'eau passe au travers de la membrane, risquant ainsi de se recondenser. Il est alors noté que ce risque est maîtrisé dans le cadre des expériences rapportées dans l'article par le passage d'un gaz sec du côté perméat, mais pourrait poser problème à plus large échelle. De plus, une telle méthode implique comme seule force motrice du traitement, le chauffage de la solution à recycler ce qui semble être une solution technique peu attrayante au regard du problème particulier qui est de limiter les dépenses énergétiques de recyclage.

Dans le document de A. Trusov et al. (Journal of Membrane Science; 383; (2011); 241-249) est divulgué l'utilisation de membranes denses pour réduire la perte de solvant dans les procédés d'extraction de CO₂ de solutions aqueuses comprenant une amine de captage. Il est divulgué que ces membranes peuvent être utilisées dans des procédés d'absorption/désorption de gaz. La force motrice du procédé est une haute pression et haute température. Ainsi, l'évacuation du gaz acide du côté perméat de la membrane ne se fait pas en appliquant une réduction de pression partielle de G. De plus, l'utilisation d'un gaz condensable comme force motrice n'est pas divulgué dans ce document, assuré ici par une haute pression et une haute température. Les membranes divulguées sont en polymères vitreux de type PTMSP, PTMGP et PMP (poly[1-(timéthylsylil)-1-propyne], poly-[1-(triméthylgermil)-1-propyne] et poly[4-méthyl-2-pentyne]). Ici aussi, le chauffage de la solution à recycler semble être la seule force motrice du traitement.

Dans le document de M. Fang et al. (International Journal of Greenhouse Gas Control; 9; (2012); 507-521) est évoqué un moyen de régénération basse énergie de CO₂ utilisant une technique membranaire sous vide avec des membranes PP, PTFE et PVDF microporeuses, considérées les mieux adaptées pour une telle régénération. La solution enrichie en CO₂ et monoéthylamine (MEA) est chauffée, pompée d'un côté d'une membrane alors qu'un courant de vapeur froide passe de l'autre côté de la membrane sous pression réduite. Le CO₂ passe au travers de la membrane du côté « vapeur » et ce mélange est extrait et condensé. Toutefois, ces membranes manquent de sélectivité et une telle méthode ne permet pas d'obtenir du CO₂ pur, permettant sa valorisation directe en tant que produit recyclé.

Dans le document brevet EP 2 708 276 est divulgué un procédé de désorption de gaz d'un liquide par membrane préférentiellement avec de la chaleur et le dispositif pour sa mise en œuvre. Il est néanmoins divulgué une température de désorption comprise entre 10 et 500°C, préférentiellement entre 30°C à 300°C ou encore 50°C à 150°C. Les membranes utilisées dans EP 2 708 276 sont perméables aux gaz et ont une base poreuse (il est explicitement fait référence aux membranes de WO2006/004400 qui sont poreuses - e.g. 0,55 et 0,12 µm) . Le procédé peut être fait sous pression (5 à 100 bars) ou non (avec des pressions comprises entre 1 et 5 bars). Le procédé comprend un échangeur de chaleur permettant de condenser le perméat au contact du liquide froid à chauffer/traiter. Toutefois il est explicitement divulgué que sous l'effet de la chaleur, le liquide du coté retentat de la membrane s'évapore et passe au travers de la membrane (cf. [0053] de ce document). Ainsi, une telle méthode ne semble pas permettre d'obtenir du CO₂ pur, permettant sa valorisation directe en tant que produit recyclé et dépend fortement d'un apport énergétique pour chauffer la solution à traiter. Le procédé divulgué dans WO 2014/042529 semble d'ailleurs très proche de celui divulgué dans EP 2 708 276.

Dans l'article de Z. Wang et al. (Chemical engineering Science; 93; (2013); 238-249), on cherche à déterminer les meilleurs couples d'agents de captage permettant une bonne absorption du CO₂, en milieu aqueux, puis une bonne désorption de ce CO₂ par la technique de «régénération sous vide membranaire ». Dans ce but, 16 amines ont été testées. Plusieurs amines ont été identifiées comme présentant des bonnes caractéristiques à ces égards. La membrane utilisée est une membrane fibreuse creuse en polypropylène microporeuse hydrophobe. Toutefois, ici encore, une telle méthode ne permet pas d'obtenir du CO₂ pur, permettant sa valorisation directe en tant que produit recyclé.

L'article de P. Kosaraju et al. (Ind. Eng. Chem. Res. 2005, 44, 1250-1258) divulgue l'utilisation de membranes fibreuses creuses poreuses en association avec des agents absorbants de CO₂ non volatiles, en particulier le polyamidoamine représenté en figure 1 de cet article. Les membranes comprennent une surface dense ultrafine en PMP (4-methyl-1-pentène), qui réduit la perte de MEA (monoethylamine), sans toutefois la circonscrire. Le procédé ainsi divulgué, comprend une membrane permettant le passage du CO₂ dissous dans une solution aqueuse mais avec des fuites d'autres composés volatiles (MEA). Ainsi, les membranes ne sont pas perméables aux gaz dissous uniquement (de manière significative).

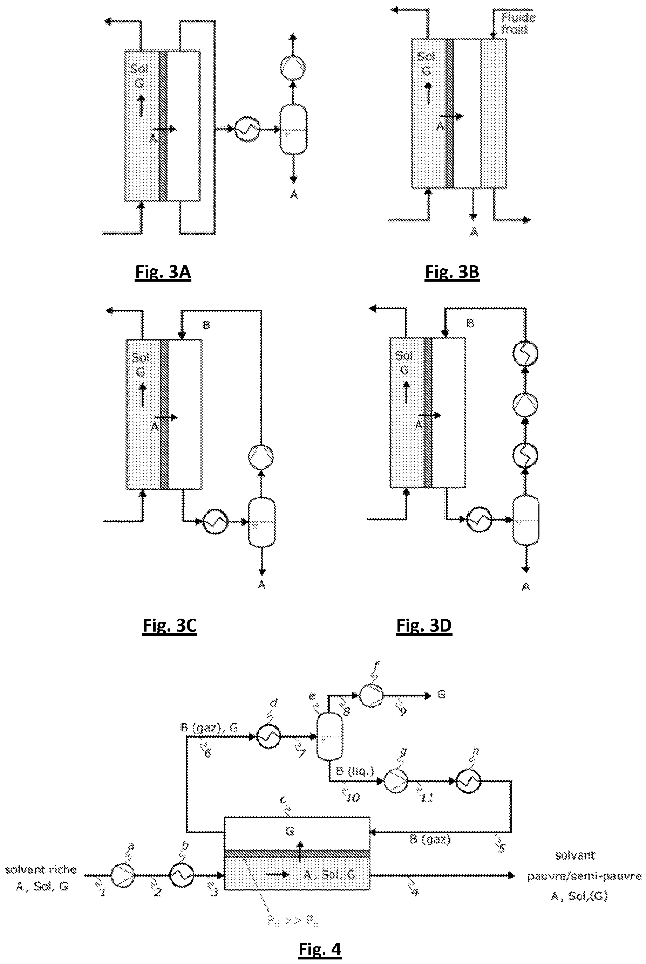

L'article de Masaaki Teramoto et al. (Separation and Purification Technology 30 (2003) 215-227) divulgue la séparation et enrichissement de CO₂ d'une solution de transport par le biais d'une membrane capillaire perméable. Le procédé divulgué comprend le passage de mélanges de CO₂ (5 à 15%) avec de la monoéthanolamine (MEA), diéthanolamine (DEA) et 2-amino-2-méthyl-1-propanol (AMP) utilisés pour transporter ce CO₂. La membrane est placée de manière verticale pour que la solution à traiter puisse en remplir le centre du bas vers le haut (membrane en forme d'un cylindre creux - figures 3 et 4). La partie extérieure semble être sous pression réduite alors que le centre à pression atmosphérique. L'ensemble est chauffé (323-343K). Il est divulgué dans le procédé que la solution enrichie en CO₂ passe au travers de la membrane. Ce liquide, en coulant sur les parois de la membrane, est débarrassé du gaz dissous par le biais de la pression réduite alors que la solution comprenant l'agent de transport de CO₂ ne traverse pas la membrane. Ainsi, les membranes capillaires divulguées laissent passer le solvant au moins.

Il a été découvert de manière surprenante, qu'une membrane dense sélective spécifiquement au gaz acide dissous, ou à l'agent de captage de celui-ci le cas échéant, peut être utilisée pour extraire le gaz acide dissous ou extraire l'agent de captage dans la solution de captage usagée, et ce de manière peu énergivore et applicable à l'échelle industrielle, par simple évacuation (e.g. mise sous vide ou passage de gaz sec ou condensable) de l'entité extraite du coté perméat de la membrane. L'objet de la présente invention permet donc une industrialisation de cette technique de traitement membranaire.

### RESUME DE L'INVENTION

L'objet de la présente invention concerne un procédé de traitement d'un liquide L (i.e. liquide usagé L de captage de gaz acide), ledit liquide comprenant :
- au moins un solvant « Sol » ;
- au moins un gaz G acide dissous dans le solvant « Sol » ; et
- au moins une substance A ;
   caractérisé en ce que :
- on dispose d'une membrane M perméable et significativement sélective à A uniquement;
- on fait passer le liquide (usagé) L d'un côté de la membrane M, A pouvant traverser M ;
- on récupère un perméat contenant A;
- on récupère un retentat contenant « Sol » ; et
- on extrait A par évacuation du côté perméat de la membrane M. Le procédé selon l'invention est défini plus précisément dans la revendication 1. Des modes de réalisation préférés du procédé sont décrits dans les revendications 2 à 7.

Il est aussi décrit un dispositif permettant la mise en œuvre du procédé selon l'invention caractérisé en ce qu'il comprend :
- une chambre C1 pour accueillir le liquide L (i.e. liquide usagé L de captage de gaz acide);
- au moins une membrane MA perméable et sélective à A uniquement en contact avec la chambre C1 ;
- une chambre C2 distincte de la chambre C1, les chambres C1 et C2 étant séparées par ladite membrane perméable et sélective MA ; et
- un moyen d'évacuation de A couplé à la chambre C2.

### DEFINITIONS

### « Liquide L »/« liquide usagé L de captage de gaz acide»

Selon la présente invention, le « liquide L »/« liquide usagé L de captage de gaz acide» est le mélange de produits obtenus en sortie de l'unité d'absorption de gaz acide. Il est constitué d'un solvant, d'un gaz acide dissous, et d'un agent de captage, ce dernier permettant d'augmenter la teneur en gaz acide dissous dans le liquide usagé. L'expression « solvant riche » est également couramment employée dans l'art pour désigner le « liquide L ».

### « Solvant Sol »

Selon la présente invention, il s'agit d'au moins une substance préférentiellement liquide à température ambiante (20 à 25°C) qui a la propriété de dissoudre, diluer et/ou extraire d'autres substances, tels que des gaz acides ou des agents de captage de ces gaz acides. De manière préférée, le solvant « Sol » selon la présente invention a une température d'ébullition comprise entre 40°C et 200°C à pression atmosphérique, plus préférentiellement comprise entre 60°C et 150°C, encore plus préférentiellement comprise entre 80°C et 120°C à pression atmosphérique.

Le solvant « Sol » selon le procédé de l'invention est un solvant aqueux. L'eau est un solvant inorganique utilisé classiquement dans l'art. Le solvant « Sol » peut être une solution aqueuse contenant un ou plusieurs additifs (tensioactifs, solution tampon...). Typiquement une solution aqueuse tampon peut contenir un carbonate ou un hydrogénocarbonate, tel que le carbonate de calcium, le carbonate de magnésium, le carbonate de potassium, le carbonate de sodium, l'hydrogénocarbonate de potassium, ou encore l'hydrogénocarbonate de sodium. L'ammoniaque est également un solvant inorganique.

### « Substance A »

Dans le cadre de la présente invention, l'expression « substance A » couvre les produits extraits au travers de la membrane selon le procédé de la présente invention. Ainsi, plus précisément, la substance A est un agent de captage dissous dans le solvant Sol. Dans le cadre de la présente invention, la substance A est donc distincte du solvant Sol (i.e. la substance A n'est pas le solvant Sol).

### « Agent de captage »

L'agent de captage selon la présente invention est un composé retenant le gaz acide dans le liquide d'absorption, lequel liquide résultant est ensuite traité par le procédé selon la présente invention. Le solvant peut également avoir des propriétés de captage de gaz acide absorbé. Toutefois, l'agent de captage se distingue du solvant Sol si celui-ci a des propriétés de captage propres, par le fait que l'agent de captage est dissous ou dispersé dans ce solvant. En d'autres termes, si le solvant lui-même est un agent de captage, il ne peut pas être extrait selon le procédé de la présente invention au travers d'une membrane. Selon l'invention, l'agent de captage est l'ammoniac (NH3). De manière avantageuse, l'agent de captage est volatil, car le procédé d'extraction selon la présente invention vise à l'extraire spécifiquement au travers d'une membrane. Par « volatil », il est entendu que le composé passe à l'état gazeux, selon les paramètres de pression et de température appliqués. Dans le cas d'espèce, de manière préférée, ces paramètres sont ajustés pour que le solvant Sol ne soit pas porté à sa température d'ébullition. De plus, ces paramètres sont ajustés pour que la membrane ne soit pas perturbée dans son fonctionnement (e.g. par dénaturation).

Des liquides absorbants sont décrits dans le document WO-A-2012/096576.

Les agents de captage comprennent des « agents de captage chimiques » et des « agents de captage physiques ». Pour des agents de captage chimiques, l'absorption du gaz acide dépend en premier lieu d'une réaction chimique entre l'agent de captage et le gaz acide dissous. Par «réaction chimique » dans ce contexte, il est entendu la création de liaisons physico-chimiques typiquement désignées comme « fortes », telles que des liaisons covalentes, la formation de complexe, des liaisons hydrogène ou ioniques « fortes ». Pour les agents de captage physiques, l'absorption du gaz acide dans le solvant Sol dépend essentiellement d'interactions physiques typiquement désignées comme étant « faibles », telles que des interactions de type Van Der Walls, électrostatiques ou ioniques « faibles ». Ainsi, les agents de captage physiques ont plutôt un rôle d'aide à la solubilité physique du gaz acide dans le solvant Sol, alors que les agents de captage chimique forment des entités identifiables d'agents de captage chimique avec le gaz acide auquel ils se lient. En général, i.e. en l'absence de membrane, la chaleur de régénération d'agents de captage physiques est beaucoup plus faible que pour les agents de captage chimiques. Ainsi, une augmentation de la température peut être requise pour obtenir l'extraction des agents de captage chimiques. Le choix d'un agent de captage peut être optimisé en fonction de la température et de la pression, en fonction de la situation, en particulier les gaz acides impliqués et du type de membrane utilisé.

Quelques exemples d'agents de captage physique sont l'éther diméthylique de tétraéthylène glycol, la N-méthyl-2-pyrrolidone, le carbonate de propylène, le méthanol, les liquides ioniques et des mélanges de ceux-ci.

### « Gaz acide G »

Il est généralement compris dans l'art que l'expression «gaz acide » est un gaz qui lorsqu'il est absorbé par une solution aqueuse, le mélange obtenu a un pH inférieur à celui avant l'absorption. Dans le cadre de la présente invention, le gaz acide est le CO₂. Néanmoins, par « gaz acide », il est compris dans le contexte de la présente divulgation tous les gaz typiquement couverts par une telle expression, par exemple le CO₂, l'H₂S, NO₂, SO₂, etc. et ce indépendamment du solvant qui les contient lorsqu'ils sont absorbés.

Dans le cadre de la présente invention, le terme « vapeur » peut être utilisé lorsqu'il est fait référence aux gaz du coté perméat de la membrane. Dans ce cadre, le terme « vapeur » tel qu'utilisé ici, se réfère au courant de substance A (agent de captage) extrait.

### « Strippage »

Dans le contexte de la présente invention, le strippage est l'élimination de gaz acides dissous à l'aide d'un solvant à l'état gaz, tel que de la vapeur d'eau. Le solvant à l'état gaz est produit par ébullition du solvant au pied de la colonne. Ainsi, dans le contexte de la présente invention, un procédé reposant uniquement sur une ou plusieurs étapes de strippage implique une forte dépense énergétique afin de produire un solvant à l'état gaz, typiquement de la vapeur d'eau, afin de désorber le gaz acide dissous du solvant. Le solvant régénéré est extrait au pied du strippeur et recyclé vers l'absorbeur après avoir cédé sa chaleur au solvant riche en gaz acide dissous dans l'économiseur (i.e. un échangeur de chaleur). Le solvant à l'état gaz et gaz acide sortant en tête du strippeur est partiellement condensé. La Figure 1 illustre cet état de la technique dans la cadre particulier de centrales électriques à énergie fossile.

### « Membrane M perméable et significativement sélective »

Dans le cadre de la présente invention, la membrane peut être sous forme de feuille plate, spirale enroulée ou d'une membrane tubulaire, sous forme de fibre creuse ou capillaire. De préférence, la membrane est mise en forme en fibres creuses. Les membranes fibres apportent une importante surface d'échange rapportée au volume de l'équipement et présentent des coûts de fabrication moindre.

De préférence, la membrane reste stable et conserve son flux élevé à la température d'extraction pendant le traitement par membrane du liquide usagé. En outre, la membrane présente de préférence de bonnes propriétés de barrière à l'égard du solvant Sol. Le terme « perméable » ne s'applique pas au solvant Sol. En conséquence, la pression du liquide d'absorption au niveau du côté rétentat de la membrane ne varie guère (ou pas) pendant le traitement, sauf en cas d'éventuelles chutes de pressions liées aux variations de résistance à l'écoulement (e.g. liés à d'éventuelles variations de température) et/ou à liés à l'extraction de la substance A (gaz acide ou agent de captage).

Pour le traitement des liquides (usagés) aqueux, la membrane est de préférence hydrophobe. Par exemples, des membranes hydrophobes convenant à la mise en œuvre de la présente invention pour les liquides aqueux comprennent les membranes perméables de polymères vitreux. De préférence, la membrane comprend des matériaux membranaires tels que le poly-(1-triméthylsilyl-1-propyne), le poly-(4-méthyl-2-pentyne), le poly-(1-triméthylgermyl-1-propyne), le poly-(vinyltriméthylsilane) et le poly-(tétrafluoroéthylène), les polyimides, polysulfones et esters cellulosiques. En outre, des membranes inorganiques appropriés peuvent être utilisés pour les solvants organiques par exemple.

Le choix de la membrane se fera donc en fonction du liquide L que l'on souhaite traiter.

Dans le cas selon l'invention d'une solution ammoniacale (par exemple 5% massique d'ammoniac dans de l'eau) chargée en CO₂, cette solution peut provenir d'une absorption à froid dans une colonne à garnissage (cf. brevet US7846240, procédé Chilled Ammonia d'Alstom) ou dans un contacteur membranaire (brevet français 1000158689). Le gaz de balayage est choisi afin qu'il ne soit pas soluble dans la solution ammoniacale, de l'azote par exemple. Pour cet exemple, l'agent de captage est NH3 et le gaz de balayage côté perméat est N2. La membrane doit alors présenter une forte perméabilité à l'ammoniac (e.g. > 3.35×10⁻¹⁵ mol.m/(m².s.Pa) (10 barrers)) mà tout en ayant une sélectivité NH₃/CO₂ supérieure à 1. De plus, elle doit présenter une bonne tenue mécanique à la différence de pression et une faible dégradation thermique et chimique. Le Tableau 1 présente une liste non exhaustive de membranes polymères compatibles avec une telle opération et reporte les perméabilités au dioxyde de carbone, à l'ammoniac et la sélectivité ammoniac/dioxyde de carbone pour chaque matériau.

Le compromis perméabilité / sélectivité parmi les membranes possibles peut être réalisé en modifiant l'agencement du procédé pour exploiter les spécificités de la membrane et selon des critères économiques.

**Tableau 1. Exemples de matériaux polymères denses présentant une sélectivité à l'ammoniac comparativement au dioxyde de carbone**

| **Polymère** | **P CO₂ (barrer^{∗})** | **P NH₃ (barrer^{∗})** | **α NH₃/CO₂** |
|---|---|---|---|
| **HDPE** | 0.4 | 10.7 | 26.8 |
| **Poly (diméthyle siloxane)** | 4652 | 12020 | 2.6 |
| **Poly(méta-silphènylène siloxane)** | 519 | 2092 | 4 |
| **Poly(para-silphènylène siloxane)** | 51 | 298 | 5.8 |
| **Polyvinyltriméthylsilane** | 180 | 830 | 4.6 |
| **Polyamide 6** | 0.088 | 1.17 | 11.4 |
| **Hydrate de Cellulose (humidité relative : 0%)** | 0.0047 | 0.016 | 3.3 |
| **Hydrate de Cellulose (Cellophane^{®}) (humidité relative : 100%)** | 0.26 | 177 | 681 |
| **Nitrate de Cellulose** | 2.1 | 57 | 25 |
| **Polytriméthylsylipropyne** | 35700 | 360000 | 10.1 |
| **Polyvinylchloride** | 0.094 | 4.9 | 52.2 |
| **Polyétherimide** | 8.9 | 48.4 | 5.5 |

| | | | |
|---|---|---|---|
| ***^{∗}"1 Barrer"=10⁻¹⁰ cm³(STP).cm.cm⁻².s⁻¹.cmHg⁻¹*** | | | |

=3.35×10⁻¹⁶ mol.m/(m².s.Pa) La sélectivité des membranes utilisées dans le cadre du procédé selon la présente invention doit évidemment être significative pour permettre sa mise en œuvre. La sélectivité des membranes qui répondent à ce critère est simplement évaluée par le ratio de la perméabilité (en barrer) de l'espèce que l'on cherche à faire passer dans le perméat sur l'espèce restant dans le retentat. Cette donnée est donc facilement déterminable. A titre d'exemples, dans le tableau ci-dessous sont données les sélectivités de membranes vis-à-vis du CO₂ par rapport à des alcanes.

**Tableau 2 : Exemples de sélectivités de membranes CO₂/alcanes**

| Abréviations^{∗} | Perméabilité de l'espèce (Barrer) | | | | | Sélectivité CO₂ par rapport à | | | |
|---|---|---|---|---|---|---|---|---|---|
| | CO₂ | C₂H₆ | C₃H₈ | C₄H₁₀ | i-C₄H₁₀ | C₂H₆ | C₃H₈ | C₄H₁₀ | i-C₄H₁₀ |
| PI (1.00) | 154 | | 168,4 | | | | 0,9 | | |
| PIB-IP (98/2) | 5,16 | | 13,6 | | | | 0,4 | | |
| PMP (p=0,84) | 110 | 5,26 | 2,37 | 1,97 | | 20,9 | 46,4 | 55,8 | |
| PMP | 110 | | 4,1 | | 1,6 | | 26,8 | | 68,8 |
| PS | 10 | 0,21 | 0,13 | | | 47,6 | 76,9 | | |
| PTFE | 10 | 2,9 | 1,28 | 1,17 | 0,46 | 3,4 | 7,8 | 8,5 | 21,7 |
| Teflon^{®} FEP | 12,7 | 0,439 | 0,142 | | | 28,9 | 89,4 | | |
| PVTMS | 190 | 7,5 | 3,6 | 1,2 | | 25,3 | 52,8 | 158,3 | |
| BD (hydropol) | 48,2 | 33,1 | 53,7 | | | 1,5 | 0,9 | | |
| BD- | 31 | | 78 | | | | 0,4 | | |
| AN(73/27) | | | | | | | | | |
| CN | 2,12 | 0,063 | 0,0084 | | | 33,7 | 252,4 | | |
| EC | 113 | 9,2 | 3,7 | 3,87 | | 12,3 | 30,5 | 29,2 | |

| | | | | | | | | | |
|---|---|---|---|---|---|---|---|---|---|
| ^{∗}«PI (1.00)»: Polyisoprene (caoutchouc); «PIB-IP (98/2)»: Poly(isobutylene-isoprene) (butyl caoutchouc) ; « PMP » (Poly(4-methyl-1-pentene) ; « PS » Polystyrene ; « PTFE » : Poly(tetrafluoroethylene) ; « Teflon FEP » : Poly(tetrafluoroethylene-hexafluoropropylene) ; « PVTMS » :Polyvinyltrimethylsilane ; « BD (hydropol) » : Poly(butadiene) hydrogenated (cryst. 29%) ; « BD-AN(73/27) » : Poly(butadiene-acrilonitrile), Perbunan ; « CN » : Nitrocellulose (butanol 30%) ; « EC » : Ethyl cellulose (Ethoxy 49.5%). | | | | | | | | | |

Ces données utilisées à titre d'exemple, publiques, ont été obtenues à partir des articles suivants :
- V. Teplyakov and P. Meares, Correlation aspects of the selective gas permeabilities of polymeric materials and membranes, Gas Sep. Purif., 4, 66, 1990;
- G.J. Van Amerongen, Influence of structure of elastomers on their permeability to gases, J. Polym. Sci. 5 (1950) 307; P. E. Cassidy, T. M. Aminabhavi, J. C. Brunson, Rubber Chem. Techonol., 56 (1983) 357;
- Tschaunler H., Pesta D., Rudorfer D., Mitt. Chem. Forsch Wist. Oester Kunsstoflin, 28, 19-22 (1974);
- N. Y. Yan, R. M. Felder, W. J. Koros, J. Polym. Sci., 25 (1980) 1755;
- R.A. Pasternak, G.L. Burns and J. Heller, Macromolecules, 4(4), (1971) 470;
- V. Teplyakov and P. Meares, Correlation aspects of the selective gas permeabilities of polymeric materials and membranes, Gas Sep. Purif., 4, 66, 1990;
- A.S. Michaels and H.J. Bixler, J. Polym. Sci., 50, 413 (1961);
- G.J. Van Amerongen, Influence of structure of elastomers on their permeability to gases, J. Polym. Sci. 5 (1950) 307;
- P.Y. Hsieh, J. Appl. Polym. Sci., 7, 1743 (1963).

Le terme « significativement » dans le cadre de la présente invention implique une sélectivité supérieure ou égale à 2. De manière préférée, cette sélectivité est supérieure ou égale à 5. De manière plus préférée, cette sélectivité est supérieure ou égale à 10. De manière encore plus préférée, cette sélectivité est supérieure ou égale à 20 ou supérieure ou égale à 50. De manière toute préférée, cette sélectivité est supérieure ou égale à 100 ou supérieure ou égale à 200. M est sélective à A uniquement. « Perméat et rétentat »

Les termes « perméat » et « rétentat » sont en lien avec le gaz (acide) ou avec l'agent de captage désorbé/extrait. En effet, le terme « perméat » tel qu'utilisé présentement fait référence à la substance A (i.e. agent de captage) passant et étant passé au travers de la membrane. Le terme « rétentat » tel qu'utilisé présentement concerne donc le liquide d'absorption (comprenant le solvant Sol) ainsi que les composés que celui-ci contient, y compris la fraction restante de gaz (acide) n'étant pas passé au travers de la membrane et évacué.

L'expression « côté rétentat » d'une membrane est donc le côté d'une membrane exposée directement au rétentat au cours du processus; L'expression « côté perméat » est en conséquence l'autre côté d'une membrane, i.e. le côté directement exposé seulement à la substance A (un agent de captage) étant passée au travers de la membrane puis évacuée.

### « Extrait A par évacuation »

L'expression « Extrait A par évacuation » selon la présente invention a le sens commun dans la technique. Néanmoins, selon le cas d'espèce, l'évacuation agit comme une « force motrice » de l'extraction. Les modes d'évacuation préférés selon la présente invention sont ceux impliquant une pression réduite, ou l'utilisation d'un balayage au gaz. Ce gaz peut être inerte, tel que N2, ou condensable, tel que de la vapeur d'eau, un alcane en C₁-C₁₂, ou un fluide frigogène. De manière préférée, le gaz condensable inerte, est un alcane en C₃ à C₆ (tel que le pentane ou l'hexane) qui nécessite peu d'énergie pour être mis en phase gaz et liquide à température ambiante et est relativement facilement condensable.

Ces gaz peuvent être produits sur place (en particulier dans l'industrie pétrochimique) ou acheminés et éventuellement préparé sur place (par vaporisation). Dans le cas d'une pression réduite, celle-ci peut être produite par une pompe ou tout moyen connu dans l'art à cet effet.

### « Environ »

Dans le cadre de la présente invention, le terme « environ » doit être compris comme se référant à une variation de plus ou moins 10% de la valeur visée.

### DESCRIPTION DETAILLEE

L'objet de la présente invention s'applique à toute industrie émettant des gaz acides et de manière préférée aux industries pétro-gazières, les raffineries, les aciéries, les cimenteries, les centrales électriques à énergie fossile.

Ainsi, l'objet de la présente invention concerne un procédé de traitement d'un liquide L (i.e. liquide usagé L de captage de gaz acide), ledit liquide comprenant :
- au moins un solvant « Sol » ;
- au moins un gaz G acide dissous dans le solvant « Sol » ; et
- un agent de captage de G ;
   caractérisé en ce que :
- on dispose d'une membrane M perméable et sélective à l'agent de captage de G uniquement;
- on fait passer le liquide (usagé) L au travers de M ;
- on récupère un perméat contenant l'agent de captage de G;
- on récupère un retentat contenant « Sol » ; et
- on extrait l'agent de captage de G uniquement par évacuation du côté perméat de la membrane M.

Le procédé selon l'invention est défini plus précisément dans la revendication 1. Des modes de réalisation préférés du procédé sont décrits dans les revendications 2 à 7.

Dans un mode de réalisation particulier, le procédé est un procédé en continu. En effet, chaque étape peut être réalisée comme une pluralité d'étapes. Par exemple, le procédé peut comprendre une pluralité d'étapes d'extraction (i.e. plusieurs membranes les unes à la suite des autres), d'étapes de condensation, éventuellement de chauffage afin de maintenir la température du liquide à une température fixe, etc.

Il est en outre possible d'ajouter un mode d'extraction classique de la substance A, e.g. par strippage, avant ou après le dispositif selon la présente invention, permettant de diminuer la dépense énergétique totale. Si le mode d'extraction classique est placé avant le dispositif selon la présente invention, cela engage à ce que le processus classique, e.g. strippage, n'est pas mis en œuvre de manière optimale, ou ne permet pas d'extraire le/les composés extraits par le processus selon la présente invention.

Ainsi, plusieurs substances A et/ou G (i.e. gaz acide(s) et/ou agent(s) de captage) peuvent être extraits par voie séquentielle via le processus. Ceci implique qu'au moins une étape du procédé met en œuvre le procédé selon la présente invention. De manière avantageuse, plusieurs membranes sélectives chacune à l'une de ces espèces chimiques sont séquentiellement positionnées dans le flux du liquide L (usagé) à traiter.

En outre, de manière avantageuse, l'évacuation du côté perméat de la membrane est assurée par l'application d'une pression réduite. De préférence, la substance A (agent de captage) peuvent alors être récupérées par mise sous pression en sortie de perméat.

Ainsi, l'objet de la présente demande de brevet concerne un procédé tel que défini ci-dessus, caractérisé en ce que l'évacuation de A du côté perméat de la membrane M se fait en appliquant au moins une réduction de pression partielle de A. Cette réduction de pression peut être mise en œuvre en appliquant une pression réduite totale, e.g. par application d'un vide par pompage du côté perméat de la membrane.

De manière alternative, l'objet de la présente demande de brevet concerne un procédé tel que défini ci-dessus, caractérisé en ce que l'évacuation de A du côté perméat de la membrane M se fait par passage d'un gaz condensable.

Ce gaz condensable peut être de la vapeur d'eau, un alcane en C₁-C₁₂ ou un alcool en C₁-C₁₂. Préférentiellement, le gaz condensable est un alcane en C₂-C₆ ou un alcool en C₁-C₆, tels que le pentane, l'hexane, le cyclopentane, le cylcohexane, le méthanol, l'éthanol ou le propanol.

Néanmoins, de manière avantageuse, l'objet de la présente demande de brevet concerne un procédé tel que défini ci-dessus, caractérisé en ce que le gaz condensable n'est pas de la vapeur d'eau.

De manière avantageuse, l'évacuation du côté perméat de la membrane est assurée par le passage du côté perméat d'un gaz condensable. La substance A (agent de captage) peut alors être récupérée par mise sous pression de l'extrait en sortie de perméat sous forme d'un mélange liquide de A avec le gaz condensé. Ce mélange peut alors être traité ultérieurement par strippage, par le procédé selon la présente invention, par simple chauffage ou par l'application d'une pression réduite au mélange liquide. De manière préférée néanmoins, en sortie de perméat, le mélange de gaz condensable et de substance A est condensé afin de séparer A du gaz condensable. Cette condensation peut être effectuée par mise sous pression contrôlée, pas passage du mélange gazeux sur un échangeur de chaleur froid, ou sur tout élément porté à une température permettant le gaz condensable de se condenser. Par « échangeur de chaleur », il est typiquement compris tout type de dispositif permettant un échange d'énergie sous forme de chaleur.

Avantageusement, la concentration en substance A (agent de captage) dans le liquide à traiter est comprise de 0,01-1 mole par litre de liquide (usagé) à traiter à pression atmosphérique, préférentiellement comprise de 0.1 à 0.9 mole par litre, plus préférentiellement de 0.3 à 0.8 mole par litre. Si la concentration est trop faible, il est nécessaire d'augmenter le nombre de passage du liquide à traiter sur la membrane, ce qui impactera le coût du procédé.

La substance A est un agent de captage de gaz G. Selon la présente invention, le liquide d'absorption comprend de l'ammoniac comme agent de captage dans l'eau comme solvant, et le gaz dissous est le CO₂.

L'objet de la présente demande de brevet concerne un procédé préférentiellement caractérisé en ce que la température de traitement est comprise et maintenue entre 10 et 80°C, préférentiellement entre 15 et 60°C, plus préférentiellement entre 15 et 40°C, par exemple entre 25 et 40°C.

De manière préférée, l'objet de la présente demande de brevet concerne un procédé tel que défini ci-dessus, caractérisé en ce que ledit procédé est effectué au plus près de la sortie de l'absorbeur afin de limiter la dispersion calorifique et qu'il n'y ait aucun apport d'énergie calorique supplémentaire. En d'autres termes, le liquide L n'est pas chauffé spécifiquement en sortie d'absorbeur, et c'est l'énergie calorique emmagasinée par le liquide L dans l'absorbeur qui lui permet de subir le traitement selon la présente invention.

Dans un mode de réalisation selon la présente invention, il est possible de mener l'extraction en faisant varier les pressions de part et d'autre de la membrane. Ainsi, typiquement le côté retentat de la membrane est à une pression de 1-200 bars, de préférence de 2-50 bars, plus préférentiellement d'environ 5 bars. Le côté perméat de la membrane doit être à une pression relativement faible en particulier vis-à-vis du coté retentat. Par exemple, la différence de pression entre le côté retentat et perméat est comprise entre 0,5 et 20 bars, préférentiellement comprise entre 1 et 10 bars, plus préférentiellement comprise entre 2 et 5 bars.

L'objet de la présente demande de brevet concerne un procédé tel que défini ci-dessus, caractérisé en ce que la pression du côté retentat de la membrane est maintenue à une valeur comprise entre 1 et 20 bars, préférentiellement entre 2 et 5 bars ou entre 1 et 2 bars. Une pression plus élevée du côté perméat de la membrane vis-à-vis du côté retentat de la membrane empêche ou réduit le passage au travers de la membrane de la substance A (gaz acide ou agent de captage).

L'objet de la présente demande de brevet concerne un procédé tel que défini ci-dessus, caractérisé en ce que la membrane perméable et sélective n'est pas poreuse et/ou microporeuse. Ainsi, de manière préférée, la membrane perméable et sélective est dense, Par « dense », il est compris dans le cadre de la présente invention que la membrane n'est pas poreuse, microporeuse, et qu'elle ne comprend pas une/des cavités (remplies d'air ou de liquide).

De manière combinable avec sa sélectivité (telle que décrite ci-dessus dans la partie définitions), la membrane n'est pas poreuse ou microporeuse, et/ou est préférentiellement dense. Ainsi dans un mode de réalisation particulier la membrane n'est pas poreuse ou microporeuse et a une sélectivité supérieure ou égale à 2, supérieure ou égale à 5, supérieure ou égale à 10, supérieure ou égale à 20 ou supérieure ou égale à 50. De manière toute préférée, cette sélectivité de la membrane qui n'est pas poreuse ou microporeuse est supérieure ou égale à 100 ou supérieure ou égale à 200. De manière encore toute préférée, M qui n'est pas poreuse ou microporeuse, est sélective à A uniquement.

Ainsi dans un mode de réalisation préféré selon la présente invention, la membrane est dense et a une sélectivité supérieure ou égale à 2, supérieure ou égale à 5, supérieure ou égale à 10, supérieure ou égale à 20 ou supérieure ou égale à 50. De manière toute préférée, cette sélectivité de la membrane dense est supérieure ou égale à 100 ou supérieure ou égale à 200. De manière encore toute préférée, M qui est dense, est sélective à A uniquement.

Par exemple, les membranes (préférentiellement non poreuses, non microporeuses et/ou denses) applicables à la présente invention peuvent être en PI, PIB-IP (98/2), PMP, PMP (p=0,84), PS, PTFE, Teflon^{®} FEP, PVTMS, BD (hydropol), BD-AN(73/27), CN, EC (mêmes abréviations que pour tableau 2 ci-dessus) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière préférée, les membranes (préférentiellement non poreuses, non microporeuses et/ou denses) applicables à la présente invention peuvent être en PMP, PMP (p=0,84), PS, PTFE, Teflon^{®} FEP, PVTMS , CN, EC (mêmes abréviations que pour tableau 2 ci-dessus) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière plus préférée, les membranes (préférentiellement non poreuses, non microporeuses et/ou denses) applicables à la présente invention peuvent être en PMP, PMP (p=0,84), PS, Teflon^{®} FEP, PVTMS , CN, EC (mêmes abréviations que pour tableau 2 ci-dessus) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière encore plus préférée, les membranes (préférentiellement non poreuses, non microporeuses et/ou denses) applicables à la présente invention peuvent être en PS, Teflon^{®} FEP, PVTMS, CN (mêmes abréviations que pour tableau 2 ci-dessus) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière toute préférée, les membranes (préférentiellement non poreuses, non microporeuses et/ou denses) sont en CN (nitrocellulose - butanol 30%) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière plus générique, les membranes (préférentiellement non poreuses, non microporeuses et/ou denses) applicables à la présente invention peuvent être de type cellulosique (e.g. CN ou EC), en un polymère de silane (e.g. PVTMS), en polystyrène, ou encore en Téflon^{®} (Téflon^{®}-FEP) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière préférée, les membranes (préférentiellement non poreuses, non microporeuses et/ou denses) applicables à la présente invention sont de type cellulosique (e.g. CN ou EC), en un polymère de silane (e.g. PVTMS), ou encore en polystyrène et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière plus préférée, les membranes (préférentiellement non poreuses, non microporeuses et/ou denses) applicables à la présente invention sont de type cellulosique (e.g. CN ou EC), ou en un polymère de silane (e.g. PVTMS) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

De manière encore plus préférée, les membranes (préférentiellement non poreuses, non microporeuses et/ou denses) applicables à la présente invention sont de type cellulosique (e.g. CN ou EC) et peut avoir une sélectivité supérieure ou égale à 2, supérieure ou égale à 5, supérieure ou égale à 10, supérieure ou égale à 20 ou supérieure ou égale à 50. De manière toute préférée, cette sélectivité de la membrane est supérieure ou égale à 100 ou supérieure ou égale à 200. De manière encore toute préférée, M est sélective à A uniquement.

Selon l'invention, A est l'ammoniac. Selon l'invention, Sol est un solvant aqueux. L'objet de la présente demande de brevet concerne un procédé tel que défini ci-dessus, caractérisé en ce que Sol est un solvant ayant un point d'ébullition inférieur à 100°C. De manière avantageuse, le liquide L est un mélange aqueux de solvants ayant une température d'ébullition inférieur à 100°C, tel qu'un mélange d'eau et d'alcool(s) en C₁-C₂.

Selon l'invention, G est CO₂. L'objet de la présente demande de brevet concerne ainsi en particulier un procédé tel que défini ci-dessus, caractérisé en ce que le solvant Sol traité obtenu est retraité par le procédé tel que défini ci-dessus, ou traité subséquemment par une méthode de strippage impliquant par exemple un gaz obtenu par une montée en température supérieure à 80°C, telle que de l'eau sous forme vapeur.

L'objet de la présente demande de brevet concerne un procédé tel que défini ci-dessus, caractérisé en ce que le retentat appauvri en A et comprenant S et G est débarrassé de G par l'application d'une pression réduite, ou d'une montée en température comprise entre 20 et 60°C.

Le maintien ou l'élévation de la température du liquide à traiter du côté retentat est avantageusement obtenu par un circuit incluant un ou plusieurs échangeurs de chaleur. Ces échangeurs de chaleurs peuvent être disposés de manière à limiter les dépenses énergétiques, i.e. la chaleur récupérée à un stade du procédé (ou d'un autre procédé dans l'entreprise) peut être utilisée pour chauffer ou maintenir si besoin la température du liquide à traiter du côté retentat, ou pour abaisser la température en sortie de perméat. Ainsi de manière avantageuse le procédé et le dispositif selon la présente invention sont imbriqués dans l'industrie les utilisant, rendant l'objet de la présente invention particulièrement intéressant en termes de compacité et/ou d'énergie.

De préférence, la vapeur sur le côté perméat de la membrane et le liquide d'absorption sur le côté retentat de la membrane sont en écoulement à contre-courant. Cela permet une bonne efficacité et une bonne récupération/répartition de chaleur interne et/ou un bon transport membranaire du gaz.

Avantageusement, la quantité de substance A (agent de captage) dans le liquide à traiter passant au travers de la membrane en un cycle vers le côté perméat de celle-ci est comprise entre 1% et 95% en poids vis-à-vis de la quantité de substance A (agent de captage) initialement contenue dans le liquide à traiter. De manière plus avantageuse, cette quantité de substance A (agent de captage) passant au travers de la membrane en un cycle est comprise entre 10% et 90% en poids, plus avantageusement encore comprise entre 20% et 80% en poids vis-à-vis de la quantité de substance A initialement contenue dans le liquide à traiter. De manière encore plus avantageuse, la quantité de substance A (agent de captage) passant au travers de la membrane en un cycle est comprise entre 30% et 70% en poids, voire comprise entre 40% et 60% en poids, telle que 50% en poids vis-à-vis de la quantité de substance A initialement contenue dans le liquide à traiter. De manière très avantageuse, la quantité de substance A (agent de captage) dans le liquide à traiter passant au travers de la membrane en un cycle vers le côté perméat de celle-ci est comprise entre 95% et 100% en poids vis-à-vis de la quantité de substance A (agent de captage) initialement contenue dans le liquide à traiter, telle que 96% ± 0,5%, 97% ± 0,5%, 98 % ± 0,5% ou 99% ± 0,5%.

Dans le procédé selon la présente invention tel que défini ci-dessus, y compris dans ces divers modes de réalisation particuliers, le courant liquide de solvant Sol et/ou d'agent de captage obtenus après avoir été débarrassé(s) du gaz acide sont de préférence réutilisés dans l'étape d'absorption dudit gaz acide. De préférence, un état d'équilibre est atteint dans un tel processus. De préférence, la quantité de gaz acide extrait est d'environ 100.% en poids vis-à-vis de la quantité de gaz acide après l'étape d'absorption précédent le traitement selon la présente invention. Néanmoins, il n'est pas nécessaire qu'un tel taux d'extraction soit atteint : un mélange comprenant le solvant Sol et éventuellement un agent de captage, comprenant une quantité de gaz acide peut être utilisé pour l'absorption tant que ce mélange permette d'absorber du gaz acide dans l'étape d'absorption.

Il est aussi décrit un dispositif tel que défini ci-dessus caractérisé en particulier en ce que la chambre C1 comprend un moyen d'acheminement du liquide usagé L à traiter et un moyen de purge du retentat comprenant S, tels que des tuyaux de raccords.

Le dispositif est caractérisé en ce que le moyen de mise sous vide de la chambre C2 ou le moyen de récupération d'au moins un gaz condensable provenant de la chambre C2 comprend au moins un moyen de condensation, tel qu'un échangeur de chaleur.

Il est aussi décrit un dispositif tel que défini ci-dessus caractérisé en ce que le moyen de mise sous vide est couplé à une cuve de récupération de G ou A sous pression.

### FIGURES

### Figure 1 procédé de référence de captage de CO₂ par absorption chimique

Après traitement, les fumées sont introduites dans l'absorbeur, une colonne à garnissage, dans lequel le CO₂ est absorbé dans une solution appelée solvant (par exemple une solution aqueuse d'amines, d'ammoniac, carbonate de potassium). En tête d'absorbeur, les fumées décarbonées sont refroidies et lavées des traces de solvant résiduelles dans une section de garnissage alimentée par de l'eau froide (« *water wash section* »). Le solvant riche en CO₂, est extrait du bas de l'absorbeur et pompé (par la pompe de solvant riche (1)), réchauffé dans un échangeur de chaleur appelé économiseur et injecté en haut du strippeur (ou régénérateur), une autre colonne à garnissage.

Dans le strippeur, le CO₂ est désorbé du solvant par de la vapeur. La vapeur est produite par ébullition du solvant au pied de la colonne. Le solvant régénéré est extrait au pied du strippeur et recyclé vers l'absorbeur via la pompe de solvant pauvre (2) après avoir cédé sa chaleur sensible au solvant riche en CO₂ dans l'économiseur. Le mélange de vapeur et de CO₂ sortant en tête du strippeur est partiellement condensé. La chaleur nécessaire à l'ébullition est apportée par condensation d'une partie de la vapeur extraite sur la partie basse pression de la turbine à vapeur du cycle électrogène. Le liquide est renvoyé en tête du strippeur et le gaz, majoritairement du CO₂ est comprimé aux spécifications du réseau de transport. Le CO₂ désorbé est généralement récupéré autour de 2-3 bars et doit être comprimé autour de 110 bars pour être injecté sur un réseau de transport vers son site de stockage. La pression de régénération est limitée par la température de désorption, au-delà d'une certaine température (120 à 160 °C), le solvant se dégrade thermiquement.

Le prélèvement d'une partie de la vapeur du cycle de la centrale (qui ne va pas produire d'électricité) représente environ 2/3 de la consommation énergétique du procédé, le complément étant dû à la compression du CO₂ (1/3) et aux travaux des appareillages auxiliaires. La perte de rendement est induite par les procédés de captage mature est de 11 à 8 %. Cette perte de rendement représente jusqu'à 70 % du coût total du CO₂ évité (hors transport et stockage).

*Figure 2* *: illustration d'un mode de réalisation selon la présente invention dans lequel l'agent de captage A est extrait.* Pour ce procédé, un liquide d'absorption chargé en gaz acide, selon l'invention du CO₂ (1), provenant d'une zone d'absorption est pompé (a). Ce liquide contient également un solvant aqueux, par exemple de l'eau H₂O, une molécule active A choisie pour sa réactivité vis-à-vis du CO₂, selon l'invention NH3. Le liquide d'absorption chargé en gaz acide est communément appelé dans l'art « solvant » riche. Ce solvant (2) peut être chauffé dans un échangeur de chaleur (b) puis est mis en écoulement dans un contacteur membranaire (c) où il va être en contact avec la membrane perméable et sélective à A (différence de perméabilité P_{A} ≫ P_{B}). Le long de l'écoulement, A va s'extraire de la phase liquide et va transférer à travers la membrane. Le solvant (4) appauvrit en A contient donc majoritairement du solvant (de l'eau) et du gaz acide (CO₂). Le gaz acide (CO₂) est alors extrait (6) du solvant par simple dégazage physique dans un ballon séparateur « flash » (e). Le dégazage peut être assisté en chauffant le solvant dans un échangeur de chaleur (d) et/ou en tirant sous vide relatif le gaz acide (CO₂) avec un compresseur (f) ou pompe à vide (selon la pression opératoire). Le solvant (7) ainsi appauvrit en gaz acide (CO₂) est alors soit renvoyé vers la section d'absorption (après mélange avec une solution de A pour rééquilibrer les concentrations) ou vers une régénération plus avancée du solvant. Afin d'abaisser la pression partielle en A dans la phase gaz du contacteur (c) pour générer une force motrice, un gaz de balayage B (12) est mis en écoulement dans le contacteur membranaire, préférentiellement à contre-courant du solvant riche a traité dans le contacteur (c). Le gaz (8) sortant du contacteur, chargé en molécule active A, est alors refroidit dans un échangeur de chaleur (g) afin de condenser la molécule A qui aura traversé la membrane dans un ballon séparateur (h). Le gaz de balayage (11) est alors extrait par un compresseur (i) pour être remis en circulation, ce compresseur fixe la pression de fonctionnement côté gaz dans le contacteur. Le liquide (10) constitué principalement de molécule A peut alors être recyclé dans une autre partie du procédé, par exemple mélangé au flux (7), pour boucler le bilan en molécule active. Les conditions opératoires du procédé telles que la pression, la température et les concentrations aux différents points du système sont à optimiser en fonction du choix du solvant (molécule A et sa concentration), du gaz de balayage B et de critères énergétiques et économiques.

*Figure 3* : Variantes du mode de réalisation selon la figure 2 : Figure 3A, 3B, 3C, 3D. La *Figure 3A* présente une réalisation par un tirage sous vide du perméat. Le vide peut être réalisé par condensation de A et/ou utilisation d'une pompe à vide comme représenté sur la Figure. Le tirage sous vide évite le recours à un gaz de balayage pour réduire la pression partielle en A côté perméat mais nécessite un apport de froid au niveau de l'échangeur de chaleur et/ou de travail électrique au niveau de la pompe à vide.

La *Figure 3B* présente une réalisation dite « *permeate gap* » utilisant le même principe que le tirage sous vide de la Figure 3A avec condensation du perméat, mais l'échangeur de chaleur est positionné dans le contacteur, directement en contact avec le compartiment gaz. Cette réalisation, plus intensifiée que dans le cas de la Figure 3A, permet de générer localement une force motrice plus forte.

La *Figure 3C* présente une réalisation utilisant un gaz de balayage pour abaisser (par dilution) la pression partielle de A dans le perméat. A est condensé en phase liquide et le gaz de balayage est recyclé dans le contacteur avec une recompression pour compenser les pertes de charge. Un vide peut également être créé à l'aide du compresseur. Ce mode nécessite l'utilisation d'un gaz de balayage (donc équipements potentiellement plus gros) mais offre plus de degrés de liberté sur le système, permettant de réduire la consommation énergétique.

La *Figure 3D* présente une réalisation avec un gaz de balayage et condensation du gaz de balayage après la condensation du perméat dans le ballon séparateur. Le « gaz » une fois condensé peut être pompé avant d'être ré-évaporé dans un échangeur de chaleur. Ce mode présente l'avantage de ne pas utiliser de compresseur ou pompe à vide, qui sont des équipements énergivores en termes d'électricité, en ayant recours à plus d'énergie thermique. Son intérêt dépendra des disponibilités de froid/chaleur de l'industriel.

*Figure 4* : illustration d'un procédé non conforme à l'invention dans lequel le gaz acide G (e.g. CO₂ sur la figure) est extrait. Un solvant (e.g. eau) chargé en gaz acide G (1) provenant d'une zone d'absorption est pompé (a). Il contient du solvant (H₂O), une molécule A choisie pour son affinité vis-à-vis du gaz acide G et la solubilité du gaz acide G dans A favorable pour l'absorption et du gaz acide G précédemment absorbé dans le solvant. Ce solvant (2) dit « riche » peut être chauffé dans un échangeur de chaleur (b) puis est mis en écoulement dans un contacteur membranaire (c) où il va être en contact avec la membrane perméable et sélective au gaz acide G (différence de perméabilité P_{CO2} » P_{B}). Le long de l'écoulement, le gaz acide G va s'extraire de la phase liquide et va transférer à travers la membrane. Le solvant (4) ainsi appauvrit en gaz acide G est alors soit renvoyé vers la section d'absorption ou vers une régénération plus avancée du solvant. Afin d'abaisser la pression partielle en gaz acide G dans la phase gaz du contacteur (c) pour générer une force motrice, un gaz B (5) est mis en écoulement dans le contacteur membranaire, préférentiellement à contre-courant. Le gaz (6) sortant du contacteur, est alors être refroidit dans un échangeur de chaleur (d) puis envoyé dans un ballon séparateur (e) afin de récupérer un flux gazeux de gaz acide G (8) qui est extrait par un compresseur (f). Un flux liquide de B (10) est récupéré en pied du ballon séparateur (e) à l'aide d'une pompe (g) qui compense les pertes de charges et enfin vaporisé dans un échangeur de chaleur (h) pour recyclage dans le contacteur membranaire (c).

La nature du gaz B est sélectionné selon plusieurs critères : il est immiscible dans le solvant. Pour le conserver dans la boucle de régénération, il possède une faible enthalpie de vaporisation pour limiter l'apport thermique dans l'échangeur (h) de sorte qu'il soit liquide à la température de refroidissement de l'échangeur (d) (par exemple 30°C) à la pression d'opération du contacteur. La température d'ébullition de B à la pression d'opération du contacteur (côté gaz) doit donc être comprise entre la température en sortie du bouilleur (h) et la température du condenseur (d) ; le choix de la pression de régénération va donc directement conditionner la nature du gaz condensable B. Idéalement, le gaz acide G doit présenter une faible solubilité dans ce composé.

*Figure 5* : Variantes du procédé non conforme à l'invention selon la figure 4 : Figure 5A, 5B, 5C. La Figure 5A présente une régénération thermique où le composé B est condensé en phase liquide, puis comprimer par une pompe avant d'être ré-évaporé. Ce mode nécessite un apport de froid pour condenser B et de chaleur pour l'évaporation de B, et évite d'utiliser un compresseur/pompe à vide, équipements fortement consommateurs d'électricité.

La Figure 5B présente une régénération électrique pour laquelle aucun apport externe de froid n'ait nécessaire. Le froid est apporté par détente de la phase B condensée, qui se ré-évapore alors. Ce mode ne nécessite pas d'apport thermique mais uniquement un apport électrique, ce qui peut présenter des avantages selon l'industrie.

La Figure 5C présente une régénération hydride entre les deux précédentes où le gaz est d'abord évaporé avant d'être recomprimé en phase gaz. Il est nécessaire d'apporter à la fois du travail électrique et des flux thermiques (chaud et froid), l'intérêt dépendra du coût relatif des différentes énergies.

*Figure 6* : Diagramme de McCabe & Thiele pour le dégazage d'ammoniac à travers la membrane, à 60°C, pour un taux de charge de 0.6 mol_{CO2}/mol_{NH3} initialement dans le solvant.

*Figure 7* : Travail de compression du compresseur (i) de gaz de balayage en fonction de la pression choisie dans le compartiment gazeux du contacteur membranaire

*Figure 8* : CO₂ dégazé dans le ballon séparateur flash en fonction de la pression appliquée (solvant à 3% en poids, taux de charge 1.0, 60°C)

*Figure 9* : Consommation électrique totale du procédé en fonction des deux degrés de liberté sur les pressions pour l'exemple choisi et comparaison avec deux procédés de références (« rétrofit » d'une centrale existante).

*Figure 10* : Diagramme de McCabe & Thiele pour le dégazage de CO₂ à travers la membrane, à 40°C, pour un de l'AMP à 30% en poids.

*Figure 11* : Ratio des débits molaires gaz sur liquide en fonction de la pression choisie côté perméat.

Figure 12 : Exemple de mise en forme du contacteur pour gérer la production de bulles de CO₂ avec des fibres immergées

### EXEMPLES

Les exemples suivants sont fournis uniquement à titre d'illustration de l'invention, mais ne limitent en rien sa portée.

### Exemple 1 : cas représenté en figure 2

Des bilans thermodynamiques ont été réalisés sur un exemple précis (sous couvert d'hypothèses simplificatrices : fonctionnement isotherme du contacteur) pour donner des estimations sur les performances du procédé selon la présente invention.

Pour l'exemple, la molécule active choisie est l'ammoniac. On considère un solvant constitué d'ammoniac à 5% massique, additionné de CO₂ avec un taux de charge de 0.6 mol_{CO2}/mol_{NH3}. Le débit total de ce solvant est de 1000 kmol/h, il est monté à une pression de 10 bars et une température de 60°C avant d'être introduit dans le contacteur membranaire (flux 3 de la Figure 2). On choisit l'azote N2 comme gaz de balayage, la pression côté gaz est un degré de liberté du système. On souhaite que le solvant passe de 5% massique (sur base non-chargée en CO₂) à 3% massique.

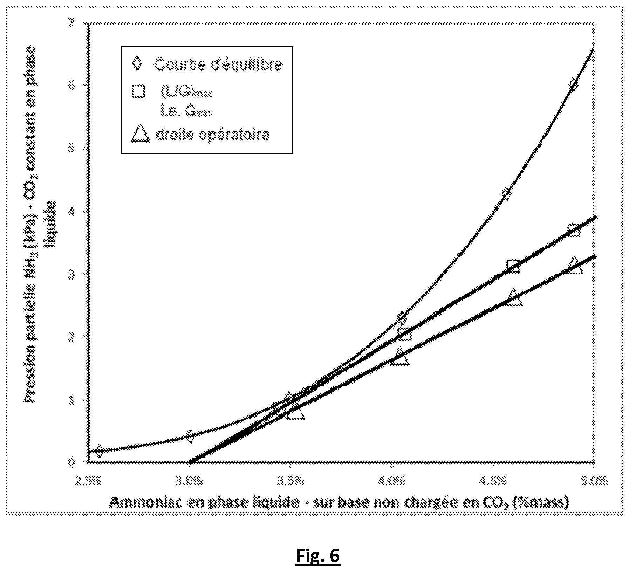

Pour que la séparation soit possible, une force motrice doit exister dans le contacteur, ce qui détermine le débit molaire *minimal* de gaz de balayage pour que le transfert soit thermodynamiquement faisable. Le tracé de la courbe d'équilibre (pression partielle d'ammoniac vs. concentration en ammoniac dans le liquide) à 60°C et de la courbe opératoire (bilan matière), voir la Figure 6, permet de déterminer ce débit minimal, i.e. lorsqu'il y a croisement des deux courbes. Le débit minimal permettant de réaliser la séparation donne la droite opératoire grise pointillés sur la Figure 6. A noter que le débit minimal varie en fonction de la pression choisie côté gaz, puisque l'objectif est d'atteindre une pression partielle en ammoniac donnée. Plus la pression est élevée, plus le débit de gaz doit être important pour atteindre cette pression partielle.

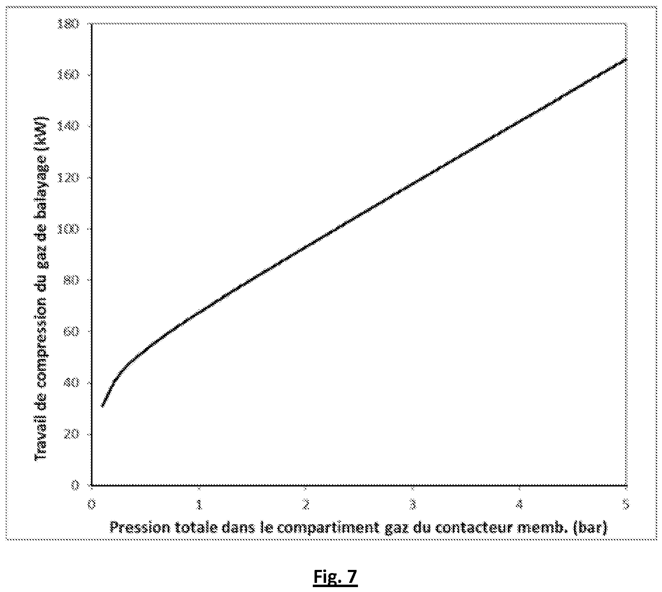

On choisit d'opérer avec un débit de gaz de balayage 20% supérieur au débit minimal, ce qui donne la droite grise pleine sur la figure 6. Le gaz de balayage, mélangé à l'ammoniac dégazé (flux 8 sur la figure 2) est alors refroidi pour condenser l'ammoniac, l'ammoniac liquide est récupéré (flux 10 sur la figure 2) en sortie du ballon séparateur (h) et le gaz de balayage peut être recomprimé avant d'être recyclé dans le contacteur. En supposant une perte de charge dans le circuit de gaz de balayage égal à 0.2 bar + 10% de la pression du gaz, on peut calculer le travail de compression du compresseur (i) en fonction de la pression choisie, comme représenté en figure 7.

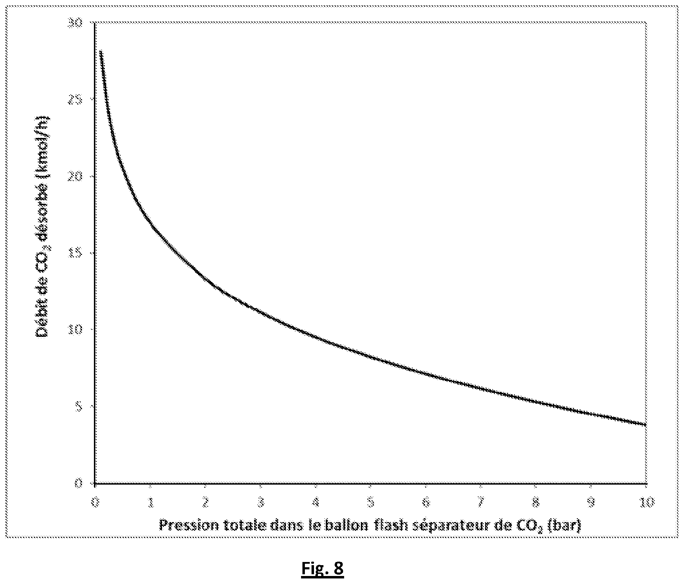

Le solvant (flux 4 sur la figure 2) ainsi appauvri en ammoniac possède un taux de charge plus élevé car le CO₂ est resté en phase liquide alors que l'ammoniac en a été retiré, son taux de charge passe de 0.6 initialement dans le solvant à 5%mass à 1.0 dans le solvant à 3 %mass. Le solvant est ensuite détendu et chauffé pour désorber le CO₂ dans le ballon séparateur (e). La température de chauffe et la pression de détente sont deux autres degrés de liberté du système. Pour l'exemple, on choisit de ne pas chauffer avant de détendre le solvant, le débit de CO₂ dégazé est représenté en fonction de la pression sur la figure 8.

A partir de ces conditions de fonctionnement, les bilans masse/énergie permettent de calculer le reste des flux du procédé et d'évaluer les performances énergétiques du procédé.

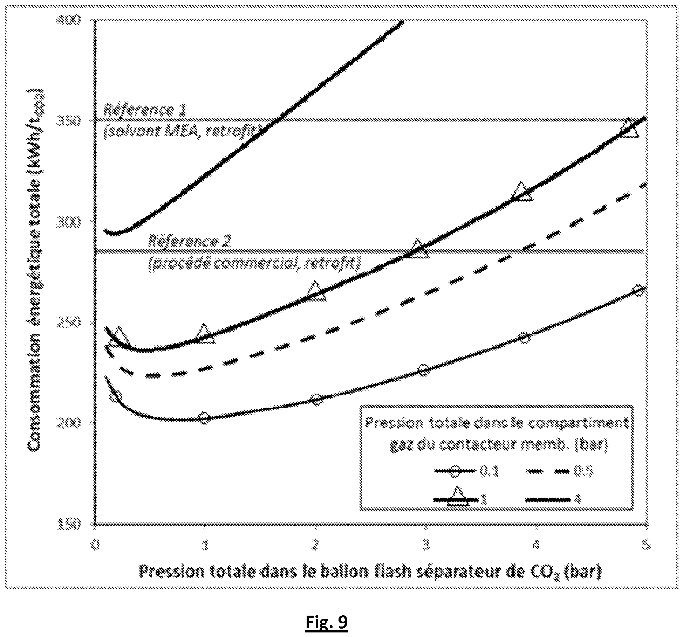

Pour une application de captage de CO₂ sur une installation industrielle, le CO₂ doit être comprimé, jusqu'à 110 bars généralement, pour être transporté vers un site de stockage. On peut ainsi calculer la consommation électrique totale du procédé, en kWh/t_{CO2}, en fonction de la pression choisie dans le compartiment gaz du contacteur membranaire et de la pression du ballon séparateur de CO₂. Par ailleurs, il faut ajouter la consommation énergétique nécessaire au chauffage du solvant à 60°C, cette consommation est évaluée à partir de la méthode proposée par Hagi et al. ("Efficiency evaluation procedure of coal-fired power plants with CO2 capture, cogeneration and hybridization"; 2015 ; Energy 91; pp. 306-323). L'ensemble des consommations électriques/thermiques pour le procédé est reporté sur la figure 9 pour l'exemple considéré en fonction des choix de pression dans le compartiment gaz du contacteur membranaire (perméat) et du ballon flash séparateur de CO₂. Deux références sont indiquées pour l'art antérieur, pour un cas de rétrofit d'une centrale existante, l'une pour le procédé MEA+LVC (projet européen CESAR), l'autre pour un procédé commercial avancé (cf. Hagi et al.).

On observe qu'il vaut mieux travailler à basse pression dans le compartiment gaz du contacteur membranaire, et qu'il existe un optimum de pression pour le ballon séparateur de CO₂. Egalement, on observe que le procédé, dans son fonctionnement optimal à 200 kWh/t_{CO2} apporte une réduction significative de la consommation énergétique de 42% par rapport au procédé historique (MEA) et de 28% par rapport à un procédé commercial.

Ces calculs ne présentent qu'une estimation des performances pour illustrer le fonctionnement du procédé et certaines hypothèses ont dues être considérées comme un fonctionnement isotherme et sans intégration thermique du procédé.

### Exemple 2 : incidence des choix de gaz de balayage sur le débit nécessaire afin de générer une force motrice et, in fine, sur la consommation électrique du procédé

La molécule active choisie est la 2-amino-2-methyl-1-propanol (AMP). On considère un solvant constitué d'AMP à 30% massique, additionné de CO₂ avec un taux de charge de 0.65 mol_{CO2}/mol_{AMP}. Le débit total de ce solvant est de 410 kmol/h, il est monté à une pression de 10 bars et une température de 60°C avant d'être introduit dans le contacteur membranaire (flux 3 de la figure 2). On souhaite que le solvant passe de 0.65 à 0.25 de taux de charge dans le contacteur. Le fait d'enlever une partie du CO₂ du solvant consomme de l'énergie, ce qui refroidit le solvant de 20°C en supposant que l'intégralité de la chaleur est consommée sous forme de chaleur sensible ; le solvant passe donc de 60°C à 40°C dans le contacteur.

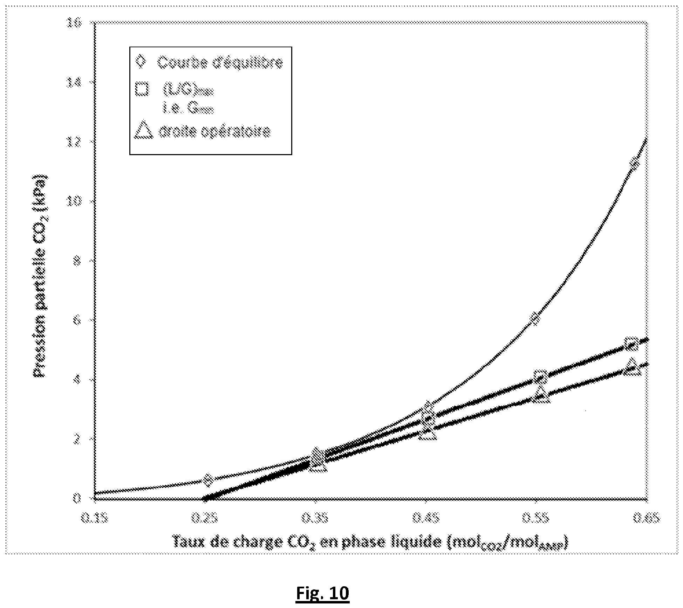

Pour déterminer le débit de gaz de balayage en fonction de la pression, on utilise la courbe d'équilibre du CO₂ et la droite opératoire, comme représenté en Figure 10. On tracera l'isotherme à 40°C pour faire un calcul très conservatif, le « pincement » du transfert de matière étant atteint vers des taux de charges faibles, soit vers la sortie liquide du contacteur.

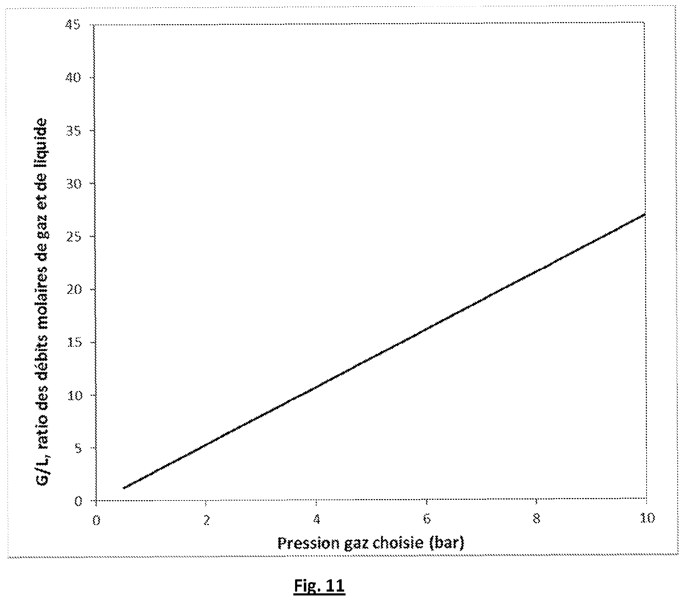

Le croisement des deux courbes nous donne le débit de gaz de balayage minimal à utiliser, on choisit d'opérer avec un débit de gaz de balayage 20% supérieur à ce débit minimal. Ainsi, on trouve des ratios de débit molaire de gaz de balayage sur débit molaire de liquide de 1.2 à 0.5 bar (hexane) et de 11 à 4 bars (butane), voir la Figure 11. On retrouve bien que le débit de gaz de balayage augmente avec la pression côté perméat de la membrane pour générer une force motrice suffisante.

Pour la suite de l'évaluation des performances, on supposera que la perte de charge côté gaz est de 0.2 bars + 10% de la pression du gaz côté perméat.

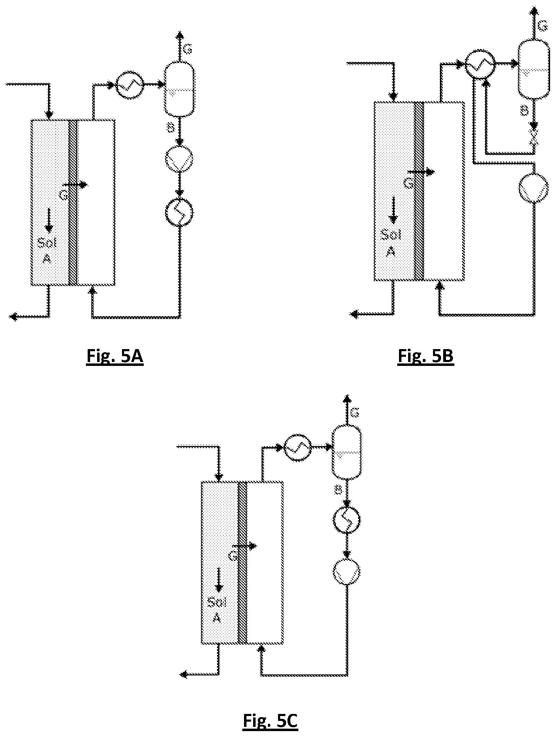

Ce débit de gaz de balayage étant calculé, on peut déterminer les consommations énergétiques du procédé. Pour le schéma de la Figure 4 (aussi en Figure 5), les besoins énergétiques sont les suivants : besoin thermique de froid pour condenser le gaz, besoin thermique de chaleur pour l'évaporer, consommation électrique pour la pompe du gaz condensé, et consommation électrique pour la compression du CO₂ jusqu'à 110 bars (non représentée sur le schéma).

Le Tableau 3 ci-dessous indique les résultats obtenus par résolution des bilans masse/énergie pour les deux pressions considérées et selon des modes de régénération thermique et électrique (voir Figure 5).

**Tableau 3 : résultats par résolution des bilans masse/énergie pour les deux pressions considérées et selon des modes de régénération thermique et électrique :**

| | | | | Régénération thermique | | | | Régénération d'électricité |
|---|---|---|---|---|---|---|---|---|
| P (bar) | gaz | G/L | CO₂ (comp.) kWh/t_{CO2} | Puissance frigorifique GJ/t_{CO2} @ 30°C | Puissance calorifique GJ/t_{CO2} @ 60°C | Puissance électrique kWh/t_{CO2} | Puissance équivalente kWh/t_{CO2} | Puissance équivalente kWh/t_{CO2} |
| 0.5 | hexane | 1.2 | 120 | 9 | 0.8 | 120 | 173 | 224 |
| 4 | butane | 10.7 | 65 | 25 | 16 | 71 | 1071 | 974 |

Ces calculs représentent une estimation des performances pour illustrer le fonctionnement du procédé. Des approximations ont dues être effectuées (fonctionnement isotherme sans intégration thermique du procédé). Ce procédé peut être utilisé en complément d'un procédé thermique usuel.

### Exemple 3 : Exemple de mise en œuvre possible selon la présente invention : gestion du risque lié au dégazage de CO₂

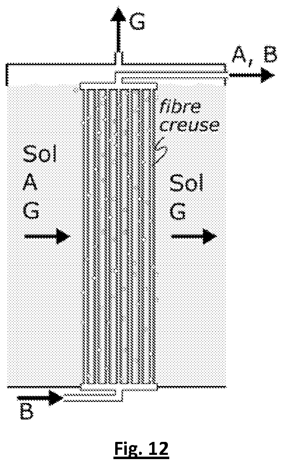

Une des difficultés du dispositif réside dans la gestion de dégazage du CO₂. Comme la molécule active est extraite du solvant dans le contacteur (c), le CO₂ peut potentiellement se désolubiliser et former des bulles. Une manière de gérer cet aspect serait de favoriser un temps de passage du liquide court dans le contacteur membranaire (voir la variante b ci-après). Alternativement, le contacteur membranaire peut être mis en forme non pas en plaçant les fibres dans une calandre mais en submergeant les fibres (ou plaques) de membranes dans le liquide à l'instar de contacteurs utilisés dans le traitement d'eau pour l'ultrafiltration/microfiltration ou des bioréacteurs à membranes comme représenté en Figure 12. Avec ce type de contacteur, l'écoulement se fait par courants-croisés et les bulles de CO₂ sont libres de remonter à la surface du solvant pour être récupérées par une extraction.

Ce procédé présente un intérêt pour obtenir une de réduction significative de la consommation énergétique des procédés de captage de CO₂.

En effet, le fait de ne pas faire bouillir le solvant pour régénérer le solvant élimine le terme de strippage (voir détails ci-avant) et l'énergie nécessaire à la régénération est alors apportée au niveau de l'échangeur (b). De plus, ce système avec une séparation physique de phase offre la possibilité de travailler à haute pression sans travailler à haute température à l'aide de la pompe (a) et de récupérer un CO₂ à haute pression, gagnant ainsi considérablement sur le travail de compression du CO₂. En contrepartie, il est nécessaire de comprimer le gaz de balayage B pour le faire circuler. Le système présente un point de fonctionnement optimal en termes de pression de désorption ; travailler à haute pression réduit certes le travail de compression du CO₂ produit (6) mais il devient nécessaire d'utiliser plus de gaz de balayage B (12) pour assurer une pression partielle en A suffisamment basse du côté gaz dans le contacteur, ce qui a pour effet d'augmenter le travail du compresseur (i).

Ce système est original dans la mesure où le mode de régénération va à l'opposé des réalisations habituelles. Usuellement, tous les systèmes de régénération d'un solvant (constitué d'eau, d'un agent de captage et de CO₂) consistent à séparer le CO₂ du mélange (eau+agent de captage). On propose ici d'extraire la molécule active du mélange eau+CO₂ (assimilable à de l'eau gazeuse) et de récupérer le CO₂ par simple dégazage.

## Revendications

1. Procédé de traitement d'un liquide L, ledit liquide comprenant :
- au moins un solvant Sol, le solvant étant un solvant aqueux ;
- au moins un gaz G acide dissous dans le solvant Sol, le gaz étant le CO₂ ; et
- au moins une substance A, la substance A étant un agent de captage dudit gaz G, la substance A étant l'ammoniac ;
**caractérisé en ce que** :
- on dispose d'une membrane M perméable et significativement sélective à A uniquement, la sélectivité de la membrane étant supérieure ou égale à 2 pour A par rapport à Sol et G, cette sélectivité étant définie comme le ratio de la perméabilité en Barrer (1 Barrer = 3.35 × 10⁻¹⁶ mol.m⁻¹s⁻¹Pa⁻¹) de l'espèce passant dans le perméat, c'est-à-dire A, sur la perméabilité de l'espèce que l'on cherche à garder dans le rétentat;
- on fait passer le liquide L d'un côté de la membrane M, A pouvant traverser M;
- on récupère un perméat contenant A ;
- on récupère un retentat contenant Sol et G ; et
- on extrait A par évacuation du côté perméat de la membrane M, l'évacuation de A se faisant au moins en appliquant une réduction de pression partielle de A, par passage d'un gaz condensable ou par mise sous vide.

2. Procédé selon la revendication 1 **caractérisé en ce que** le rétentat appauvri en A et comprenant Sol et G est débarrassé de G par l'application d'une pression réduite, ou d'une montée en température comprise entre 20 et 60°C.

3. Procédé selon l'une quelconque des revendications 1 à 2 **caractérisé en ce que** la température de traitement est comprise et maintenue entre 10 et 80°C, préférentiellement entre 15 et 40°C.

4. Procédé selon l'une quelconque des revendications 1 à 3 **caractérisé en ce que** la pression du côté retentat de la membrane est maintenue à une valeur comprise entre 1 et 20 bars, préférentiellement comprise entre 1 et 2 bars.

5. Procédé selon l'une quelconque des revendications 1 à 4 **caractérisé en ce que** la membrane perméable et sélective n'est pas poreuse et/ou microporeuse.

6. Procédé selon l'une quelconque des revendications 1 à 5 **caractérisé en ce que** le gaz condensable est un alcane en C₁-C₁₂ ou un alcool en C₁-C₁₂.

7. Procédé selon l'une quelconque des revendications 1 à 6 **caractérisé en ce que** le solvant Sol traité obtenu est retraité par le procédé selon l'une quelconque des revendications 1 à 6, ou traité subséquemment par une méthode de strippage impliquant par exemple un gaz obtenu par une montée en température supérieure à 80°C, telle que de l'eau sous forme vapeur.

## Patentansprüche

1. Verfahren zur Behandlung einer Flüssigkeit L, wobei die Flüssigkeit umfasst:
- wenigstens ein Lösungsmittel Sol, wobei das Lösungsmittel ein wässriges Lösungsmittel ist;
- wenigstens ein saures Gas G, das in dem Lösungsmittel Sol gelöst wird, wobei das Gas CO₂ ist; und
- wenigstens eine Substanz A, wobei die Substanz A ein Mittel zum Auffangen des Gases G ist, wobei die Substanz A Ammoniak ist;
**dadurch gekennzeichnet, dass**:
- eine Membran M vorhanden ist, die durchlässig und nur für A signifikant selektiv ist, wobei die Selektivität der Membran größer gleich 2 für A in Bezug auf Sol und G ist, wobei diese Selektivität als das Verhältnis der Permeabilität in Barrer (1 Barrer = 3.35 × 10⁻¹⁶ mol.m⁻¹s⁻¹Pa⁻¹) der in das Permeat übergehenden Spezies definiert ist, d.h. A, auf die Permeabilität der Spezies, die im Retentat gehalten werden soll;
- die Flüssigkeit L auf eine Seite der Membran M geleitet wird, wobei A durch M hindurchgehen kann;
- ein A enthaltendes Permeat gewonnen wird;
- ein Sol und G enthaltendes Retentat gewonnen wird; und
- A durch Evakuierung von der Permeatseite der Membran M extrahiert wird, wobei die Evakuierung von A wenigstens durch Anwendung einer Partialdruckreduktion von A, durch Hindurchleiten eines kondensierbaren Gases oder durch Vakuumierung erfolgt.

2. Verfahren nach Anspruch 1, **dadurch gekennzeichnet, dass** das an A abgereicherte und Sol und G enthaltende Retentat durch Anwendung eines reduzierten Drucks oder eines Temperaturanstiegs zwischen 20 und 60°C von G befreit wird.

3. Verfahren nach einem der Ansprüche 1 bis 2, **dadurch gekennzeichnet, dass** die Behandlungstemperatur zwischen 10 und 80°C, bevorzugt zwischen 15 und 40°C, liegt und gehalten wird.

4. Verfahren nach einem der Ansprüche 1 bis 3, **dadurch gekennzeichnet, dass** der Druck an der Retentatseite der Membran auf einem Wert zwischen 1 und 20 bar, bevorzugt zwischen 1 und 2 bar, gehalten wird.

5. Verfahren nach einem der Ansprüche 1 bis 4, **dadurch gekennzeichnet, dass** die durchlässige und selektive Membran nicht porös und/oder mikroporös ist.

6. Verfahren nach einem der Ansprüche 1 bis 5, **dadurch gekennzeichnet, dass** das kondensierbare Gas ein Alkan an C₁-C₁₂ oder ein Alkohol an C₁-C₁₂ ist.

7. Verfahren nach einem der Ansprüche 1 bis 6, **dadurch gekennzeichnet, dass** das erhaltene behandelte Lösungsmittel Sol durch das Verfahren nach einem der Ansprüche 1 bis 6 aufbereitet oder nachfolgend mittels eines Stripping-Verfahrens behandelt wird, das beispielsweise ein durch einen Temperaturanstieg über 80°C erhaltenes Gas wie Wasserdampf einbezieht.

## Claims

1. Method for treating a liquid L, said liquid comprising:
- at least one solvent Sol, said solvent being aqueous;
- at least one acid gas G dissolved in the solvent Sol, said gas being CO₂; and
- at least one substance A, said substance A being a capture agent of said gas G; said substance A being ammonia;
**characterized in that**:
- a permeable membrane M significantly selective to A only is provided, said selectivity being superior or equal to 2 for A than for Sol and G, this selectivity is defined as the ratio of the permeability measured in Barrer (1 Barrer = 3.35 × 10⁻¹⁶ mol/m⁻¹.s⁻¹.Pa-¹) of the specie passing into the permeate, that is A, on the permeability of the specie we seek to keep in the retentate;
- the liquid L is fed from one side of the membrane M, A being able to pass through M;
- a permeate containing A is collected;
- a retentate containing Sol and G is collected; and
- A is extracted by removal from the permeate side of the membrane M, the removal of A occurring at least by applying a reduction in the partial pressure of A, by the passage of a condensable gas or by vacuuming.

2. Method according to claim 1, wherein the retentate depleted of A and comprising Sol and G is cleaned of G by the application of reduced pressure, or by a temperature increase of between 20 and 60°C.

3. Method according to any one of claims 1 and 2, wherein the treatment temperature is comprised and maintained between 10 and 80°C, preferably between 15 and 40°C.

4. Method according to any one of claims 1 to 3, wherein the pressure on the retentate side of the membrane is maintained at a value between 1 and 20 bar, preferably between 1 and 2 bar.

5. Method according to any one of claims 1 to 4, wherein the permeable and selective membrane is not porous and/or microporous.

6. Method according to any one of claims 1 to 5, wherein the condensable gas is a C₁-C₁₂ alkane or a C₁-C₁₂ alcohol.

7. Method according to any one of claims 1 to 6, wherein the treated solvent Sol obtained is retreated according to any one of claims 1 to 6, or subsequently treated by a stripping method involving for example a gas obtained by a temperature increase greater than 80°C, such as water in vapor form.
